# EUROPEAN PATENT SPECIFICATION

(11) **EP 1 141 154 B1**
(45) Date of publication and mention of the grant of the patent: **17.08.2005**
(21) Application number: 00963009.6
(22) Date of filing: 29.09.2000
(51) Int. Cl.: C09G 1/02, C09K 3/14

(54) **POLISHING COMPOSITION AND METHOD**
POLIER-ZUSAMMENSETZUNG UND -VERFAHREN
COMPOSITION ET PROCEDE DE POLISSAGE

(30) Priority: 30.09.1999 JP 27911299
(43) Date of publication of application: 10.10.2001
(73) Proprietor: Showa Denko K.K., Tokyo 105-8518 (JP); Yamaguchi Seiken Kogyo K.K., Nagoya-shi, Aichi 267-0056 (JP)
(72) Inventor: ISHITOBI, Ken, Showa Denko K.K. Shiojiri Works, Shiojiri-shi, Nagano 399-6461 (JP); NOZAKI, Masahiro, Nagoya-shi, Aichi 462-0052 (JP); NAGAO, Tadanori, Yamaguchi Seiken Kogyo K.K., Nagoya-shi, Aichi 267-0056 (JP); HAYASHI, Yoshiki, Yamaguchi Seiken Kogyo K.K., Nagoya-shi, Aichi 267-0056 (JP)
(74) Representative: Casey, Lindsay Joseph
(86) International application number: PCT/JP2000/006805
(87) International publication number: WO 2001/023485

(56) References cited:
- EP-A- 0 842 997
- EP-A- 0 967 260
- US-A- 4 645 561
- US-A- 4 915 710
- PATENT ABSTRACTS OF JAPAN vol. 1995, no. 11, 26 December 1995 (1995-12-26) & JP 07 216345 A (FUJIMI INKOOPOREETETSUDO:KK), 15 August 1995 (1995-08-15) cited in the application

## Description

The present invention relates to a polishing composition which is employed for precise polish-finishing of metal, plastic, or glass, particularly employed for precise finishing of the surface of an aluminum magnetic disk (hereinafter the disk will be referred to as a "hard disk") which is installed in a hard disk drive of a computer.

### Background Art

In recent years, as high-performance computers have been developed and computers have been downsized, there has been demand for high-quality mirror-surface finishing in hard disks without surface defects, in accordance with an increase in recording density of the disks. In order to meet such demand for surface finishing, there have been attained a variety of technical developments on polishing compositions, polishing pads, polishing machines, and polishing techniques.

For example, Japanese Patent Application Laid-Open (*kokai*) No. 62-25187 discloses a polishing composition containing an inorganic salt, serving as a polishing accelerator, such as nickel nitrate or aluminum nitrate for increasing polishing rate. Japanese Patent Application Laid-Open (*kokai*) No. 2-84485 discloses a polishing composition which contains an organic acid such as gluconic acid or lactic acid, and a sodium salt thereof for increasing polishing rate, and which can provide a polished surface with reduced surface defects. Japanese Patent Application Laid-Open (*kokai*) No. 7-216345 discloses a polishing composition which contains an organic acid, a molybdic acid salt, and alumina sol so as to attain a high polishing rate and a polished surface with reduced surface defects. These polishing compositions have been developed in order to maintain high rate of polishing a hard disk, reduce surface roughness and surface defects, and increase recording density.

Meanwhile, Japanese Patent Application Laid-Open (*kokai*) Nos. 5-2747 and 5-89459 disclose methods for reducing dub-off at the circumferential end of a hard disk and for increasing recording area, in order to increase recording capacity per hard disk. However, these publications do not disclose a polishing composition, although they disclose conditions for polishing. Japanese Patent Application Laid-Open (*kokai*) No. 1-263186 discloses a polishing composition containing triethanolamine carboxylic acid, triethanol hydrochloride, and aluminum stearate for reducing the amount of dub-off. However, since hard disks these days must meet very strict requirements concerning surface roughness, such a polishing composition cannot be directly applied to high-precision finishing of polished surfaces.

The polishing compositions disclosed in the above publications have been developed in order to enhance polishing rate, to reduce surface defects such as micro-pits and micro-protrusions as well as scratches on the surface of a hard disk for improvement of quality, and to reduce surface roughness for increasing recording density. Incidentally, there has been demand for increasing recording capacity in a hard disk of conventional size. In order to increase recording capacity of a hard disk, recording density per unit area in the disk must be increased. However, during polishing of a hard disk, the circumference of the disk is excessively polished to form a curve portion. Such an unavoidable curve portion is called "dub-off" or "roll-off," and a region containing dub-off in a hard disk cannot be employed for recording. If the amount of dub-off can be reduced as much as possible, recording capacity per hard disk can be increased. Therefore, there has been demand for minimizing the amount of dub-off in a hard disk.

In view of the foregoing, an object of the present invention is to provide a polishing composition and method which can maintain polishing rate during polishing of the surface of a hard disk, maintain excellent properties and high quality of the surface of the disk, and provide a finished surface in which the amount of dub-off is considerably reduced as compared with that of a conventional level.

The present invention provides a polishing composition comprising water, alumina as polishing material , a polishing accelerator, and at least one of hydroxypropyl cellulose (hereinafter abbreviated as "HPC") and hydroxyalkyl alkyl cellulose (hereinafter abbreviated as "HRRC"). The polishing composition is mainly employed for polishing the surface of a hard disk which is installed in a computer, but is not limited thereto. Particularly, the composition can provide a finished surface in which the amount of dub-off is considerably reduced as compared with that of a conventional level, while maintaining high polishing rate, high surface quality, and excellent surface roughness. The present invention also provides a method for polishing a workpiece using such a polishing composition.

### Brief Description of Drawings

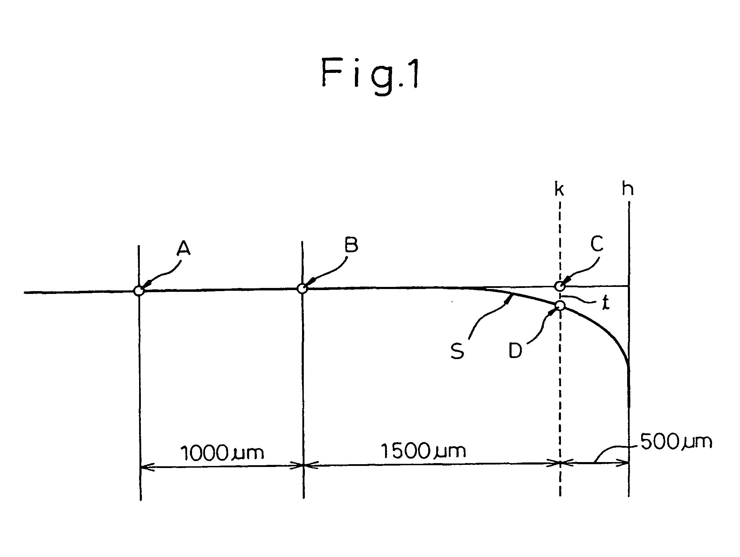

Fig. 1 is a schematic representation employed for explanation of determination of the amount of dub-off, in which
   S: Curve in the vicinity of the circumferential end of a disk, which is drawn by use of a surfcorder
   h: Perpendicular line brought into contact with the circumferential end of a disk
   A: Point on the curve which is 3,000 µm from perpendicular line h
   B: Point on the curve which is 2,000 µm from perpendicular line h
   C: Point on a linear line passing through points A and B, which is 500 µm from perpendicular line h
   k: Perpendicular line passing through point C
   D: Point at which perpendicular line k and curve S cross
   t: Length between point C and point D (the amount of dub-off)

### Best Modes for Carrying Out the Invention

An unavoidable phenomenon during polishing by use of free abrasive grains is occurrence of dub-off in a polished disk. The mechanism of dub-off is not necessarily clarified. However, through performing polishing operation over years, it has been found that when polishing rate is high, the amount of dub-off of a disk is reduced, but surface roughness generally increases and protrusions tend to be generated on the disk; and that when polishing rate is low, the amount of dub-off of a disk increases and pits tend to be generated on the disk. Meanwhile, it has been found that when a disk sinks deeply into a polishing pad, the amount of dub-off of the disk tends to increase. On the basis of these findings, extensive studies have been performed on a variety of additives, for example, in order to increase the viscosity of a polishing solution while the performance of a polishing material contained in the solution is maintained. The polishing composition of the present invention has been accomplished on the basis of the studies.

In the present invention, the amount of dub-off is determined as follows, as described with reference to Fig. 1.

As shown in Fig. 1, a circumferential portion of a polished hard disk is traced along the surface by use of a surfcorder to draw a curve S. A perpendicular line h is drawn along the circumferential end of the curve S. Points on the curve S which are 3,000 µm and 2,000 µm from the perpendicular line h towards the center of the disk are assigned A and B, respectively. On a linear line passing the points A and B, a point which is 500 µm from the perpendicular line h is assigned C. A perpendicular line k is drawn so as to pass the point C, and a point at which the perpendicular line k and the curve S cross is assigned D. The length t between the points C and D is determined as the amount of dub-off of the disk.

In order to confirm the effect of a thickener for reducing dub-off, a variety of polymers were evaluated in terms of water-solubility or other properties. Consequently, it was found that when hydroxypropyl cellulose (HPC) or hydroxyalkyl alkyl cellulose such as hydroxypropyl methyl cellulose (HPMC), hydroxyethyl methyl cellulose (HEMC), or ethyl hydroxyethyl cellulose (EHEC), which has a more steric fiber structure among water-soluble cellulose derivatives, is added to a polishing composition, the polishing composition can provide an excellent polished surface with a small amount of dub-off while high polishing rate and high surface accuracy are maintained.

The mechanism of reduction in the amount of dub-off through the addition of HPC, HPMC, HEMC, or EHEC has not yet been elucidated, but the molecular structure or the type of end group of cellulose ether and thickening through the addition of the cellulose may be attributed to reduction in the amount of dub-off.

No particular limitation is imposed on the form of crystal structure, such α, θ, or γ, of alumina which is preferably employed as a polishing material in the present invention, but α-alumina is more preferable in consideration of polishing rate. The particle size of alumina is determined according to the desired surface roughness of a disk. The mean particle size of alumina is generally 0.02-5 µm, preferably 0.1-3 µm. The particle size distribution of alumina may be preferably as narrow as possible. The amount of alumina may be 1-30 wt.% on the basis of the entirety of a polishing composition, preferably 3-20 wt.%.

The polishing material which is employed in the present invention is alumina.

The particle size and the amount of the polishing material which is employed may be determined in a manner similar to the case in which alumina is employed, but particle size and amount may be changed.

A polishing accelerator which may be employed in the present invention may be an organic acid or an inorganic acid salt. An organic acid is at least one species selected from the group consisting of malonic acid, succinic acid, adipic acid, lactic acid, malic acid, citric acid, glycine, aspartic acid, tartaric acid, gluconic acid, heptogluconic acid, iminodiacetic acid, and fumaric acid. Meanwhile, an inorganic acid salt is at least one species selected from the group consisting of sodium sulfate, magnesium sulfate, nickel sulfate, aluminum sulfate, ammonium sulfate, nickel nitrate, aluminum nitrate, ammonium nitrate, ferric nitrate, aluminum chloride, and nickel sulfamate. The amount of an organic acid or an inorganic acid salt which is incorporated into the polishing composition is preferably 0.003-10 wt.% on the basis of the entirety of the composition.

A polishing accelerator which may be employed in the present invention may be a combination of an organic acid and at least one of an organic acid salt and an inorganic acid salt. An organic acid is at least one species selected from the group consisting of malonic acid, succinic acid, adipic acid, lactic acid, malic acid, citric acid, glycine, aspartic acid, tartaric acid, gluconic acid, heptogluconic acid, iminodiacetic acid, and fumaric acid. An organic acid salt which is employed in combination with the organic acid may be a potassium salt, sodium salt, or ammonium salt of the above organic acid. An inorganic acid salt which is employed in combination with the organic acid is at least one species selected from the group consisting of sodium sulfate, magnesium sulfate, nickel sulfate, aluminum sulfate, ammonium sulfate, nickel nitrate, aluminum nitrate, ammonium nitrate, ferric nitrate, aluminum chloride, and nickel sulfamate. When a combination of an organic acid and an organic acid salt or a combination of an organic acid and an inorganic acid salt is employed, the amount of the combination which is incorporated into the polishing composition is preferably 0.01-10 wt.% on the basis of the entirety of the composition. In this case, the amount of an organic acid is preferably at least 0.003 wt.% on the basis of the entirety of the composition.

When a combination of an organic acid and an organic acid salt is employed as a polishing accelerator, an organic acid and a salt of the same organic acid are preferably employed in combination so as to obtain excellent polishing properties of the composition.

The amount of HPC, HPMC, HEMC, or EHEC, which is employed in the polishing composition of the present invention singly or in combination, is 0.001-2 wt.% on the basis of the entirety of the composition. When the amount is very small, the effect of reducing dub-off is not obtained, whereas when the amount is very large, polishing rate decreases. The amount is preferably 0.01-1.0 wt.% on the basis of the entirety of the composition.

The aforementioned amount of each component in the polishing composition is the amount when the composition is employed for polishing a hard disk substrate. Therefore, it is efficient that the polishing composition containing each component in an amount larger than that described above is produced and transported, and the composition is diluted upon use such that the amount of the component becomes as described above.

If necessary, in the polishing composition of the present invention, there may be employed, as an additive, alumina sol, a surfactant, a cleaning agent, a rust preventive, a preservative, a pH regulating agent, and a surface modification agent such as sulfamic acid or phosphoric acid which is known to exhibit the effect for reducing surface defects.

The polishing composition of the present invention preferably has a pH of 2-6.

### Examples

The present invention will next be described in more detail by way of examples, which should not be construed as limiting the invention thereto.

Examples 1 through 15 are shown in Table 1, and Comparative Examples 1 through 6 are shown in Table 2.

### (Preparation of polishing composition)

Aluminum hydroxide was heated at about 1,200°C in air in a firing furnace, to thereby obtain α-alumina. The thus-obtained α-alumina was crushed and subjected to wet-classification, thereby preparing alumina samples having mean particle sizes of 0.6 µm, 0.7 µm, and 1.0 µm.

Subsequently, on the basis of compositions shown in Tables 1 and 2, water, alumina, a polishing accelerator, and HPC, HPMC, HEMC, or EHEC were weighed, incorporated, and mixed, to thereby prepare a polishing composition sample.

### (Polishing conditions)

An NiP-plated aluminum disk (size: 3.5 inch) was employed as a workpiece to be polished. A polishing test and evaluation of the disk were carried out under the following conditions.
Polishing test conditions
   Polishing test machine:
      9B double-sided polishing machine (product of System Seiko K.K.)
   Polishing pad: Politex DG
   Number of revolutions of surface plate:
      upper surface plate 28 rpm,
      lower surface plate 45 rpm,
      Sun gear 8 rpm
   Feed rate of slurry: 100 ml/min.
   Polishing time: 5 minutes
   Operation pressure: 80 g/cm²
Evaluation of disk
   Polishing rate: calculated by difference in
      weight before and after polishing the disk
   Quality of polished surface:
      pits, protrusions, and scratches on disks were observed under a microscope, and
      rating "good" was assigned when the total number of pits is not more than 10 for both sides of five disks, the total number of protrusions is 0 for both sides of five disks, and the total number of scratches is not more than 5 for both sides of one disk
   Amount of dub-off:
      measured by use of a surfcorder (model: SE-30D, product of Kosaka Kenkyujo) (measured as shown in Fig. 1)

The results of polishing test of Examples and Comparative Examples are shown in Tables 1 and 2, respectively.

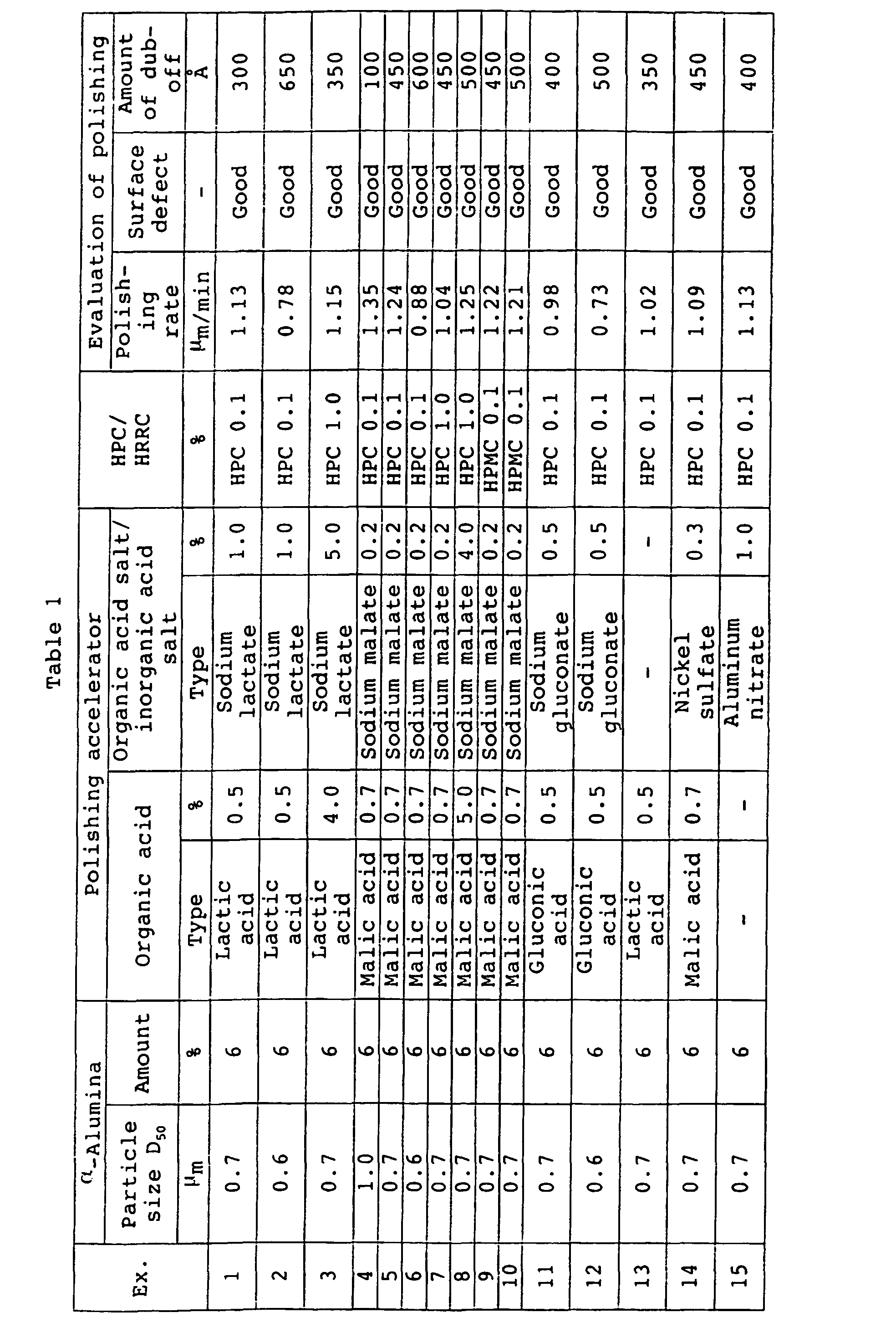

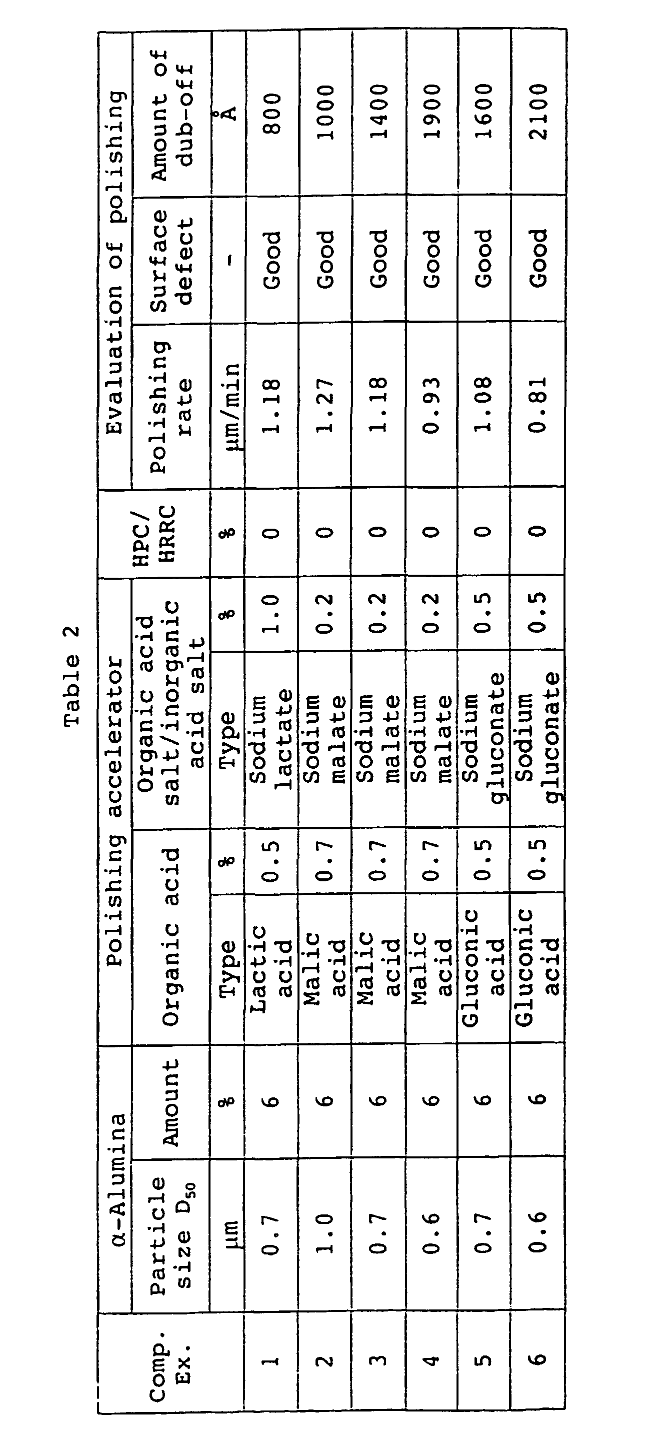

As is apparent from comparison of Table 1 with Table 2, when HPC, HPMC, or HEMC is incorporated into a polishing composition, the amount of dub-off is reduced; i.e., the composition is improved.

### Industrial Applicability

As described above, the polishing composition of the present invention comprising water, alumina, a polishing accelerator, and at least one of HPC and HRRC enables maintenance of a predetermined polishing rate, surface accuracy, and mirror surface without surface defects, and can provide excellent polishing performance so as to reduce the amount of dub-off.

## Claims

1. A polishing composition comprising water, alumina, a polishing accelerator, and at least one of hydroxypropyl cellulose and hydroxyalkyl alkyl cellulose.

2. A polishing composition according to claim 1, wherein the polishing accelerator comprises an organic acid or an inorganic acid salt.

3. A polishing composition according to claim 1 or claim 2, wherein the polishing accelerator comprises an organic acid and at least one of an organic acid salt and an inorganic acid salt.

4. A polishing composition according to any one of claims 1 through 3, wherein the organic acid is at least one species selected from the group consisting of malonic acid, succinic acid, adipic acid, lactic acid, malic acid, citric acid, glycine, aspartic acid, tartaric acid, gluconic acid, heptogluconic acid, iminodiacetic acid, and fumaric acid.

5. A polishing composition according to any one of claims 2 through 4, wherein the inorganic acid salt is at least one species selected from the group consisting of sodium sulfate, magnesium sulfate, nickel sulfate, aluminum sulfate, ammonium sulfate, nickel nitrate, aluminum nitrate, ammonium nitrate, ferric nitrate, aluminum chloride, and nickel sulfamate.

6. A polishing composition according to claim 3, wherein the organic acid salt is a potassium salt, a sodium salt, or an ammonium salt of the organic acid as recited in claim 4.

7. A polishing composition according to any one of claims 1 through 6, wherein the amount of the polishing accelerator is 0.01-10 wt.% on the basis of the entirety of the composition.

8. A polishing composition according to any one of claims 1 through 7, wherein the hydroxyalkyl alkyl cellulose is at least one species selected from the group consisting of hydroxypropyl methyl cellulose, hydroxyethyl methyl cellulose, and ethyl hydroxyethyl cellulose.

9. A polishing composition according to any one of claims 1 through 8, wherein the amount of hydroxypropyl cellulose and/or hydroxyalkyl alkyl cellulose is 0.001-2 wt.% on the basis of the entirety of the composition.

10. A method for a precision polishing, comprising polishing an aluminum magnetic disk substrate with a polishing composition comprising water, a polishing material, a polishing accelerator, and at least one of hydroxypropyl cellulose and hydroxyalkyl alkyl cellulose.

11. A polishing composition according to claim 10, wherein the polishing material is selected from among alumina, silica, titania, zirconia, and ceria.

12. A polishing composition according to claim 10, wherein the polishing material is alumina.

13. A polishing composition according to claim 10 or claim 11, wherein the polishing accelerator comprises an organic acid or an inorganic acid salt.

14. A polishing composition according to any one of claims 10 through 13, wherein the polishing accelerator comprises an organic acid and at least one of an organic acid salt and an inorganic acid salt.

15. A polishing composition according to any one of claims 10 through 14, wherein the organic acid is at least one species selected from the group consisting of malonic acid, succinic acid, adipic acid, lactic acid, malic acid, citric acid, glycine, aspartic acid, tartaric acid, gluconic acid, heptogluconic acid, iminodiacetic acid, and fumaric acid.

16. A polishing composition according to any one of claims 13 through 15, wherein the inorganic acid salt is at least one species selected from the group consisting of sodium sulfate, magnesium sulfate, nickel sulfate, aluminum sulfate, ammonium sulfate, nickel nitrate, aluminum nitrate, ammonium nitrate, ferric nitrate, aluminum chloride, and nickel sulfamate.

17. A polishing composition according to claim 14, wherein the organic acid salt is a potassium salt, a sodium salt, or an ammonium salt of the organic acid as recited in claim 15.

18. A polishing composition according to any one of claims 10 through 17, wherein the amount of the polishing accelerator is 0.01-10 wt.% on the basis of the entirety of the composition.

19. A polishing composition according to any one of claims 10 through 18, wherein the hydroxyalkyl alkyl cellulose is at least one species selected from the group consisting of hydroxypropyl methyl cellulose, hydroxyethyl methyl cellulose, and ethyl hydroxyethyl cellulose.

20. A polishing composition according to any one of claims 10 through 19, wherein the amount of hydroxypropyl cellulose and/or hydroxyalkyl alkyl cellulose is 0.001-2 wt.% on the basis of the entirety of the composition.

## Patentansprüche

1. Poliermasse, umfassend Wasser, Aluminiumoxid, einen Polierbeschleuniger und mindestens eine von Hydroxypropylcellulose und Hydroxyalkylalkylcellulose.

2. Poliermasse nach Anspruch 1, worin der Polierbeschleuniger eine organische Säure oder ein anorganisches Säuresalz umfasst.

3. Poliermasse nach Anspruch 1 oder 2, worin der Polierbeschleuniger eine organische Säure und mindestens eines von einem organischen Säuresalz und einem anorganischen Säuresalz umfasst.

4. Poliermasse nach einem der Ansprüche 1 bis 3, worin die organische Säure mindestens eine Spezies darstellt, die aus der Gruppe ausgewählt ist, bestehend aus Malonsäure, Bernsteinsäure, Adipinsäure, Milchsäure, Äpfelsäure, Citronensäure, Glycin, Asparaginsäure, Weinsäure, Gluconsäure, Heptogluconsäure, Iminodiessigsäure und Fumarsäure.

5. Poliermasse nach einem der Ansprüche 2 bis 4, worin das anorganische Säuresalz mindestens eine Spezies darstellt, die aus der Gruppe ausgewählt ist, bestehend aus Natriumsulfat, Magnesiumsulfat, Nickelsulfat, Aluminiumsulfat, Ammoniumsulfat, Nickelnitrat, Aluminiumnitrat, Ammoniumnitrat, Eisen(III)-nitrat, Aluminiumchlorid und Nickelsulfamat.

6. Poliermasse nach Anspruch 3, worin das organische Säuresalz ein Kaliumsalz, ein Natriumsalz oder ein Ammoniumsalz der organischen Säure nach Anspruch 4 darstellt.

7. Poliermasse nach einem der Ansprüche 1 bis 6, worin die Menge des Polierbeschleunigers 0,01 - 10 Gew.-% bezogen auf die Gesamtheit der Masse beträgt.

8. Poliermasse nach einem der Ansprüche 1 bis 7, worin die Hydroxyalkylalkylcellulose mindestens eine Spezies darstellt, die aus der Gruppe ausgewählt ist, bestehend aus Hydroxypropylmethylcellulose, Hydroxyethylmethylcellulose und Ethylhydroxyethylcellulose.

9. Poliermasse nach einem der Ansprüche 1 bis 8, worin die Menge von Hydroxypropylcellulose und/oder Hydroxyalkylalkylcellulose 0,001 - 2 Gew.-% bezogen auf die Gesamtheit der Masse beträgt.

10. Verfahren zum Präzisionspolieren, umfassend Polieren eines Aluminiumsubstrats für Magnetplatten mit einer Poliermasse, umfassend Wasser, ein Poliermaterial, einen Polierbeschleuniger und mindestens eine von Hydroxypropylcellulose und Hydroxyalkylalkylcellulose.

11. Poliermasse nach Anspruch 10, worin das Poliermaterial ausgewählt ist aus Aluminiumoxid, Siliciumdioxid, Titandioxid, Zirkonoxid und Ceroxid.

12. Poliermasse nach Anspruch 10, worin das Poliermaterial Aluminiumoxid darstellt.

13. Poliermasse nach Anspruch 10 oder 11, worin der Polierbeschleuniger eine organische Säure oder ein anorganisches Säuresalz umfasst.

14. Poliermasse nach einem der Ansprüche 10 bis 13, worin der Polierbeschleuniger eine organische Säure und mindestens eines von einem organischen Säuresalz und einem anorganischen Säuresalz umfasst.

15. Poliermasse nach einem der Ansprüche 10 bis 14, worin die organische Säure mindestens eine Spezies darstellt, die aus der Gruppe ausgewählt ist, bestehend aus Malonsäure, Bernsteinsäure, Adipinsäure, Milchsäure, Äpfelsäure, Citronensäure, Glycin, Asparaginsäure, Weinsäure, Gluconsäure, Heptogluconsäure, Iminodiessigsäure und Fumarsäure.

16. Poliermasse nach einem der Ansprüche 13 bis 15, worin das anorganische Säuresalz mindestens eine Spezies darstellt, die aus der Gruppe ausgewählt ist, bestehend aus Natriumsulfat, Magnesiumsulfat, Nickelsulfat, Aluminiumsulfat, Ammoniumsulfat, Nickelnitrat, Aluminiumnitrat, Ammoniumnitrat, Eisen(III)-nitrat, Aluminiumchlorid und Nickelsulfamat.

17. Poliermasse nach Anspruch 14, worin das organische Säuresalz ein Kaliumsalz, ein Natriumsalz oder ein Ammoniumsalz der organischen Säure nach Anspruch 15 darstellt.

18. Poliermasse nach einem der Ansprüche 10 bis 17, worin die Menge des Polierbeschleunigers 0,01 - 10 Gew.-% bezogen auf die Gesamtheit der Masse beträgt.

19. Poliermasse nach einem der Ansprüche 10 bis 18, worin die Hydroxyalkylalkylcellulose mindestens eine Spezies darstellt, die aus der Gruppe ausgewählt ist, bestehend aus Hydroxypropylmethylcellulose, Hydroxyethylmethylcellulose und Ethylhydroxyethylcellulose.

20. Poliermasse nach einem der Ansprüche 10 bis 19, worin die Menge der Hydroxypropylcellulose und/oder Hydroxyalkylalkylcellulose 0,001 - 2 Gew.-% bezogen auf die Gesamtheit der Masse beträgt.

## Revendications

1. Composition de polissage comprenant de l'eau, de l'alumine, un accélérateur de polissage, et au moins un composé parmi l'hydroxypropyl cellulose et l'hydroxyalkyl alkyl cellulose.

2. Composition de polissage selon la revendication 1, dans laquelle l'accélérateur de polissage comprend un acide organique et un sel d'acide inorganique.

3. Composition de polissage selon la revendication 1 ou la revendication 2, dans laquelle l'accélérateur de polissage comprend un acide organique et au moins un sel parmi un sel d'acide organique et un sel d'acide inorganique.

4. Composition de polissage selon l'une quelconque des revendications 1 à 3, dans laquelle l'acide organique est au moins une espèce sélectionnée parmi le groupe constitué de l'acide malonique, de l'acide succinique, de l'acide adipique, de l'acide lactique, de l'acide malique, de l'acide citrique, de la glycine, de l'acide aspartique, de l'acide tartrique, de l'acide gluconique, de l'acide heptogluconique, de l'acide iminodiacétique et de l'acide fumarique.

5. Composition de polissage selon l'une quelconque des revendications 2 à 4, dans laquelle le sel d'acide inorganique est au moins une espèce sélectionnée parmi le groupe constitué du sulfate de sodium, du sulfate de magnésium, du sulfate de nickel, du sulfate d'aluminium, du sulfate d'ammonium, du nitrate de nickel, du nitrate d'aluminium, du nitrate d'ammonium, du nitrate ferrique, du chlorure d'aluminium et du sulfamate de nickel.

6. Composition de polissage selon la revendication 3, dans laquelle le sel d'acide organique est un sel de potassium, un sel de sodium ou un sel d'ammonium de l'acide organique selon la revendication 4.

7. Composition de polissage selon l'une quelconque des revendications 1 à 6, dans laquelle la quantité de l'accélérateur de polissage représente de 0,01 à 10 % en poids sur la base de la totalité de la composition.

8. Composition de polissage selon l'une quelconque des revendications 1 à 7, dans laquelle l'hydroxyalkyl alkyl cellulose est au moins une espèce sélectionnée parmi le groupe constitué de l'hydroxypropyl méthyl cellulose, de l'hydroxyéthyl méthyl cellulose et de l'éthyl hydroxyéthyl cellulose.

9. Composition de polissage selon l'une quelconque des revendications 1 à 8, dans laquelle la quantité d'hydroxypropyl cellulose et/ou d'hydroxyalkyl alkyl cellulose représente de 0,001 à 2 % en poids sur la base de la totalité de la composition.

10. Procédé pour effectuer un polissage de précision, comprenant le polissage d'un substrat sous la forme d'un disque magnétique d'aluminium avec une composition de polissage comprenant de l'eau, une substance de polissage, un accélérateur de polissage et au moins un composé parmi une hydroxypropyl cellulose et une hydroxyalkyl alkyl cellulose.

11. Composition de polissage selon la revendication 10, dans laquelle la substance de polissage est sélectionnée parmi l'alumine, la silice, l'oxyde de titane, l'oxyde de zirconium et l'oxyde de cérium.

12. Composition de polissage selon la revendication 10, dans laquelle la substance de polissage est de l'alumine.

13. Composition de polissage selon la revendication 10 ou la revendication 11, dans laquelle l'accélérateur de polissage comprend un acide organique ou un sel d'acide inorganique.

14. Composition de polissage selon l'une quelconque des revendications 10 à 13, dans laquelle l'accélérateur de polissage comprend un acide organique et au moins un sel parmi un sel d'acide organique et un sel d'acide inorganique.

15. Composition de polissage selon l'une quelconque des revendications 10 à 14, dans laquelle l'acide organique est au moins une espèce sélectionnée parmi le groupe constitué de l'acide malonique, de l'acide succinique, de l'acide adipique, de l'acide lactique, de l'acide malique, de l'acide citrique, de la glycine, de l'acide aspartique, de l'acide tartrique, de l'acide gluconique, de l'acide heptogluconique, de l'acide iminodiacétique et de l'acide fumarique.

16. Composition de polissage selon l'une quelconque des revendications 13 à 15, dans laquelle le sel d'acide inorganique est au moins une espèce sélectionnée parmi le groupe constitué du sulfate de sodium, du sulfate de magnésium, du sulfate de nickel, du sulfate d'aluminium, du sulfate d'ammonium, du nitrate de nickel, du nitrate d'aluminium, du nitrate d'ammonium, du nitrate ferrique, du chlorure d'aluminium et du sulfamate de nickel.

17. Composition de polissage selon la revendication 14, dans laquelle le sel d'acide organique est un sel de potassium, un sel de sodium ou un sel d'ammonium de l'acide organique selon la revendication 15.

18. Composition de polissage selon l'une quelconque des revendications 10 à 17, dans laquelle la quantité de l'accélérateur de polissage représente de 0,01 à 10 % en poids sur la base de la totalité de la composition.

19. Composition de polissage selon l'une quelconque des revendications 10 à 18, dans laquelle l'hydroxyalkyl alkyl cellulose est au moins une espèce sélectionnée parmi le groupe constitué de l'hydroxypropyl méthyl cellulose, de l'hydroxyéthyl méthyl cellulose et de l'éthyl hydroxyéthyl cellulose.

20. Composition de polissage selon l'une quelconque des revendications 10 à 19, dans laquelle la quantité d'hydroxypropyl cellulose et/ou d'hydroxyalkyl alkyl cellulose représente de 0,001 à 2 % en poids sur la base de la totalité de la composition.
